# EUROPEAN PATENT APPLICATION

(11) **EP 4 432 586 A1**
(43) Date of publication of application: **18.09.2024**
(21) Application number: 23219727.7
(22) Date of filing: 22.12.2023
(51) Int. Cl.: H04J 3/06, H04J 3/14, H04L 12/12

(54) **TIME SYNCHRONIZATION METHOD, TIME SYNCHRONIZATION ANOMALY DIAGNOSIS METHOD, AND DRIVING DEVICE**

(30) Priority: 16.03.2023 CN 202310275332
(71) Applicant: Nio Technology (Anhui) Co., Ltd, Hefei, Anhui 230601 (CN)
(72) Inventor: SHENG, Xiangzheng, Hefei City, Anhui (CN); SHENG, Kaijun, Hefei City, Anhui (CN); WU, Haibin, Hefei City, Anhui (CN)
(74) Representative: Vossius & Partner Patentanwälte Rechtsanwälte mbB

(57) **Abstract**

The disclosure specifically provides a time synchronization method, a time synchronization anomaly diagnosis method, and a driving device. The time synchronization method of the disclosure is applied to an intelligent driving device, the driving device includes a plurality of control units, a plurality of sensors, a network unit, and a router connecting the network unit to the plurality of control units, and the method includes the following steps: setting a universal time domain and a local time domain, where the universal time domain uses UTC time obtained by the network unit, and the local time domain uses PTP time generated by a crystal oscillator of a network port of the router or a crystal oscillator of one of the plurality of control units as a PTP time source; and synchronizing each of the plurality of control units to the UTC time and the PTP time. Setting the UTC time and the PTP time and synchronizing the UTC time and the PTP time to each control unit achieve time synchronization of the double time domains for the control units.

## Description

The present application claims priority of CN patent application 202310275332.X filed on March 16, 2023 with the title "Time synchronization method, time synchronization anomaly diagnosis method, and driving device".

### Technical Field

The disclosure relates to the field of time synchronization technologies of a driving device, and specifically provides a time synchronization method, a time synchronization anomaly diagnosis method, and a driving device.

### Background Art

With the popularity of vehicles, the requirements of people for intelligent driving systems in the vehicles also increase. The stable operation of an intelligent driving system is inseparable from time synchronization of various elements of the intelligent driving system.

The time synchronization technology of the intelligent driving system in the prior art commonly uses Universal Time Coordinated (UTC) time to add time stamps to different sensors in the intelligent driving system for time synchronization. However, due to an impact of an environment of a driving device and a power-on condition after it has been in a sleep mode, the UTC time may experience time jumps, which may result in inaccurate time stamps for the different sensors in the intelligent driving system, leading to a failure in multi-sensor data fusion, and affecting the functional operation of the intelligent driving system.

Accordingly, there is a need for a novel technical solution of time synchronization in the field to solve the problems described above.

### Summary

In order to overcome the above defects, the disclosure is proposed to provide a time synchronization method, a time synchronization anomaly diagnosis method, and a driving device, to solve or at least partially solve the technical problem of a failure in multi-sensor data fusion caused by time jumps.

In a first aspect, the disclosure provides a time synchronization method. The method is applied to an intelligent driving device. The driving device includes a plurality of control units, a plurality of sensors, a network unit, and a router connecting the network unit to the plurality of control units; and the method includes the following steps: setting a universal time domain and a local time domain, where the universal time domain uses UTC time obtained by the network unit, and the local time domain uses Precision Time Protocol (PTP) time generated by a crystal oscillator of a network port of the router or a crystal oscillator of one of the plurality of control units as a PTP time source; and synchronizing each of the plurality of control units to the UTC time and the PTP time.

In a technical solution of the above time synchronization method, the synchronizing each of the plurality of control units to the UTC time and the PTP time includes: synchronizing the plurality of control units to the PTP time based on the gPTP protocol; and/or synchronizing the plurality of control units to the UTC time based on the NTP protocol.

In a technical solution of the above time synchronization method, the synchronizing the plurality of control units to the PTP time based on the gPTP protocol includes: if the local time domain uses the PTP time generated by the crystal oscillator of one of the plurality of control units, periodically synchronizing the other control units to the PTP time.

In a technical solution of the above time synchronization method, the synchronizing the plurality of control units to the PTP time based on the gPTP protocol includes: if the local time domain uses the PTP time generated by the crystal oscillator of the network port of the router, periodically synchronizing each of the plurality of control units to the PTP time.

In a technical solution of the above time synchronization method, further including: adding, by the control unit based on the PTP time, a PTP time stamp to data received from a corresponding sensor.

In a technical solution of the above time synchronization method, the sensor is an image sensor; the driving device further includes a frame synchronization hardwire, which connects a control unit in the plurality of control units that triggers a frame synchronization trigger signal, the image sensor, and a control unit corresponding to the image sensor; and the adding, by the control unit based on the PTP time, a PTP time stamp to data received from a corresponding sensor includes: in response to triggering of the frame synchronization trigger signal, recording, by the control unit corresponding to the image sensor, a triggering moment; and in response to receiving image frame data from the image sensor, adding the PTP time at the triggering moment to the image frame data as an image frame time stamp.

In a technical solution of the above time synchronization method, the driving device further includes a deserializer; and the method further includes: in response to triggering of the frame synchronization trigger signal, performing, by the image sensor, rising edge or falling edge triggering to generate image frame data; and performing, by the deserializer, a serial-to-parallel conversion on the image frame data, and sending the converted image frame data to the control unit corresponding to the image sensor.

In a technical solution of the above time synchronization method, further including: during data exchange between the plurality of control units, adding, by a control unit that sends data, a PTP time stamp to the data as a data sending time stamp at a moment the data is sent; adding, by a control unit that receives the data, a PTP time stamp to the data as a data receiving time stamp at a moment the data is received; and obtaining, by the control unit that receives the data, a transmission delay of the data based on the data sending time stamp and the data receiving time stamp.

In a technical solution of the above time synchronization method, further including: adding, by each control unit based on the UTC time, a UTC time stamp to a log and/or a fault code generated by the control unit internally.

In a technical solution of the above time synchronization method, the plurality of control units belong to controllers within a same control domain of the driving device; or the plurality of control units belong to controllers within different control domains of the driving device, and there are a plurality of routers belonging to the controllers within the different control domains.

In a second aspect, the disclosure provides a time synchronization anomaly diagnosis method. The method is applied to an intelligent driving device, and includes: performing time synchronization on the plurality of control units according to the time synchronization method according to any one of the above; performing hardwire connection between the network unit, a PTP time source, and passive synchronization control units, where if the PTP time source is a crystal oscillator of one of the plurality of control units, the passive synchronization control units are all the other control units, or if the PTP time source is a crystal oscillator of a network port of the router, the passive synchronization control units are all the control units; in response to the passive synchronization control units receiving a 1pps signal sent by the PTP time source, adding, by each passive synchronization control unit, a UTC time stamp and a PTP time stamp to the 1pps signal; broadcasting, by each passive synchronization control unit, the UTC time stamp and the PTP time stamp corresponding to the 1pps signal to the other passive synchronization control units; respectively comparing, by any one of the other passive synchronization control units, the UTC time stamp and the PTP time stamp added to the 1pps signal with the UTC time stamp and the PTP time stamp obtained from the broadcasting; and determining, based on a comparison result, whether there is a time synchronization anomaly between the compared control units.

In a technical solution of the above time synchronization anomaly diagnosis method, the determining, based on a comparison result, whether there is a time synchronization anomaly between the compared control units includes:

if the comparison result is greater than a preset threshold, determining that there is a time synchronization anomaly between the compared control units.

In a third aspect, a driving device is provided. The driving device is applicable to the time synchronization method according to any one of above and the time synchronization anomaly diagnosis method according to any one of above. The driving device includes a plurality of control units, a plurality of sensors, a network unit, and a router connecting the network unit to the plurality of control units; and the network unit is used as a UTC time source, and a crystal oscillator of a network port of the router or a crystal oscillator of one of the plurality of control units is used as a PTP time source, so as to obtain UTC time and PTP time.

In a technical solution of the above driving device, the driving device further includes a frame synchronization hardwire, which connects a control unit in the plurality of control units that triggers a frame synchronization trigger signal, an image sensor from the plurality of sensors, and a control unit corresponding to the image sensor.

In a technical solution of the above driving device, the driving device further includes a deserializer, the deserializer is connected to each of the image sensor from the plurality of sensors and the control unit corresponding to the image sensor, and the deserializer is configured to perform a serial-to-parallel conversion on image frame data of the image sensor, and send the converted image frame data to the control unit.

Solution 1: A time synchronization method, where the method is applied to an intelligent driving device, and the driving device includes a plurality of control units, a plurality of sensors, a network unit, and a router connecting the network unit to the plurality of control units; and
the method includes the following steps:
setting a universal time domain and a local time domain, where the universal time domain uses UTC time obtained by the network unit, and the local time domain uses PTP time generated by a crystal oscillator of a network port of the router or a crystal oscillator of one of the plurality of control units as a PTP time source; and
synchronizing each of the plurality of control units to the UTC time and the PTP time.

Solution 2: The time synchronization method according to solution 1, where the synchronizing each of the plurality of control units to the UTC time and the PTP time includes:
synchronizing the plurality of control units to the PTP time based on the gPTP protocol; and/or
synchronizing the plurality of control units to the UTC time based on the NTP protocol.

Solution 3: The time synchronization method according to solution 2, where the synchronizing the plurality of control units to the PTP time based on the gPTP protocol includes:
if the local time domain uses the PTP time generated by the crystal oscillator of one of the plurality of control units, periodically synchronizing the other control units to the PTP time.

Solution 4: The time synchronization method according to solution 2, where the synchronizing the plurality of control units to the PTP time based on the gPTP protocol includes:
if the local time domain uses the PTP time generated by the crystal oscillator of the network port of the router, periodically synchronizing each of the plurality of control units to the PTP time.

Solution 5: The time synchronization method according to any one of solutions 1 to 4, further including:
adding, by the control unit based on the PTP time, a PTP time stamp to data received from a corresponding sensor.

Solution 6: The time synchronization method according to solution 5, where the sensor is an image sensor;
the driving device further includes a frame synchronization hardwire, which connects a control unit in the plurality of control units that triggers a frame synchronization trigger signal, the image sensor, and a control unit corresponding to the image sensor; and
the adding, by the control unit based on the PTP time, a PTP time stamp to data received from a corresponding sensor includes:
in response to triggering of the frame synchronization trigger signal, recording, by the control unit corresponding to the image sensor, a triggering moment; and
in response to receiving image frame data from the image sensor, adding the PTP time at the triggering moment to the image frame data as an image frame time stamp.

Solution 7: The time synchronization method according to solution 6, where the driving device further includes a deserializer; and
the method further includes: in response to triggering of the frame synchronization trigger signal, performing, by the image sensor, rising edge or falling edge triggering to generate image frame data; and
performing, by the deserializer, a serial-to-parallel conversion on the image frame data, and sending the converted image frame data to the control unit corresponding to the image sensor.

Solution 8: The time synchronization method according to any one of solutions 1 to 4, further including:
during data exchange between the plurality of control units, adding, by a control unit that sends data, a PTP time stamp to the data as a data sending time stamp at a moment the data is sent;
adding, by a control unit that receives the data, a PTP time stamp to the data as a data receiving time stamp at a moment the data is received; and
obtaining, by the control unit that receives the data, a transmission delay of the data based on the data sending time stamp and the data receiving time stamp.

Solution 9: The time synchronization method according to solution 1, further including:
adding, by each control unit based on the UTC time, a UTC time stamp to a log and/or a fault code generated by the control unit internally.

Solution 10: The time synchronization method according to solution 1, where the plurality of control units belong to controllers within a same control domain of the driving device; or the plurality of control units belong to controllers within different control domains of the driving device, and there are a plurality of routers belonging to the controllers within the different control domains.

Solution 11: A time synchronization anomaly diagnosis method, where the method is applied to an intelligent driving device, and the method includes:
performing time synchronization on the plurality of control units according to the time synchronization method according to any one of solutions 1 to 10;
performing hardwire connection between the network unit, a PTP time source, and passive synchronization control units, where if the PTP time source is a crystal oscillator of one of the plurality of control units, the passive synchronization control units are all the other control units, or if the PTP time source is a crystal oscillator of a network port of the router, the passive synchronization control units are all the control units;
in response to the passive synchronization control units receiving a 1pps signal sent by the PTP time source, adding, by each passive synchronization control unit, a UTC time stamp and a PTP time stamp to the 1pps signal;
broadcasting, by each passive synchronization control unit, the UTC time stamp and the PTP time stamp corresponding to the 1pps signal to the other passive synchronization control units;
respectively comparing, by any one of the other passive synchronization control units, the UTC time stamp and the PTP time stamp added to the 1pps signal with the UTC time stamp and the PTP time stamp obtained from the broadcasting; and
determining, based on a comparison result, whether there is a time synchronization anomaly between the compared control units.

Solution 12: The time synchronization anomaly diagnosis method according to solution 11, where the determining, based on a comparison result, whether there is a time synchronization anomaly between the compared control units includes:
if the comparison result is greater than a preset threshold, determining that there is a time synchronization anomaly between the compared control units.

Solution 13: A driving device, where the driving device is applicable to the time synchronization method according to any one of solutions 1 to 10 and the time synchronization anomaly diagnosis method according to any one of solutions 11 to 12, and the driving device includes a plurality of control units, a plurality of sensors, a network unit, and a router connecting the network unit to the plurality of control units; and the network unit is used as a UTC time source, and a crystal oscillator of a network port of the router or a crystal oscillator of one of the plurality of control units is used as a PTP time source, so as to obtain UTC time and PTP time.

Solution 14: The driving device according to solution 13, where the driving device further includes a frame synchronization hardwire, which connects a control unit in the plurality of control units that triggers a frame synchronization trigger signal, an image sensor from the plurality of sensors, and a control unit corresponding to the image sensor.

Solution 15: The driving device according to solution 13, where the driving device further includes a deserializer, the deserializer is connected to each of an image sensor from the plurality of sensors and a control unit corresponding to the image sensor, and the deserializer is configured to perform a serial-to-parallel conversion on image frame data of the image sensor, and send the converted image frame data to the control unit.

The above one or more technical solutions of the disclosure have at least one or more of the following beneficial effects: setting the UTC time and the PTP time and synchronizing the UTC time and the PTP time to each control unit achieve time synchronization of the double time domains for the control units, thereby avoiding the case in the prior art as follows: time stamps of different sensors in an intelligent driving system are inaccurate due to time jumps, resulting in a failure in multi-sensor data fusion, and affecting the functional operations of the intelligent driving system.

Further, in the technical solutions for implementing the disclosure, the time generated by the crystal oscillator of one of the plurality of control units is used as the local time domain, or the time generated by the crystal oscillator of the network port of the router is used as the local time domain, and the other control units in the plurality of control units than this control unit, or the plurality of control units are all periodically synchronized to the PTP time in the local time domain, so as to achieve that the PTP time between the other control units in the plurality of control units than this control unit, or between the plurality of control units is not synchronized, and further achieve independent operation of the PTP time between the other control units in the plurality of control units than this control unit, or between the plurality of control units, thereby ensuring the stable operation of the control units, preventing the time of the control units from being affected by the time jumps, reducing an error rate of data fusion, and improving the data fusion efficiency.

Further, in the technical solutions for implementing the disclosure, the control unit records the triggering moment by receiving the frame synchronization trigger signal, and in conjunction with the image frame data of the image sensor, the control unit adds the PTP time at the triggering moment to the image frame data as the image frame time stamp, so that a shooting moment of the image sensor is consistent with the time stamp of the image frame data in terms of time, thereby improving the accuracy of the image frame data.

Further, in the technical solutions for implementing the disclosure, the control unit that sends the data adds the data sending time stamp to the sent data according to the moment the data is sent, and the control unit that receives the data adds the data receiving time stamp to the data according to the moment the data is received, so that transmission duration of sending and receiving the data is obtained, thereby detecting the transmission delay of the data of the two control units in data exchange.

Further, in the technical solutions for implementing the disclosure, each passive synchronization control unit adds the UTC time stamp and the PTP time stamp to the 1pps signal and broadcasts the UTC time stamp and the PTP time stamp to the other passive synchronization control units, and the passive synchronization control unit respectively compares the two received time stamps with the two time stamps of its own corresponding to the same 1pps signal, and determines, based on the comparison result, whether there is a time anomaly between the two compared control units, thereby detecting the time synchronization of the two control units.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic flowchart of main steps of a time synchronization method according to an embodiment of the disclosure;
FIG. 2 is a schematic flowchart of main steps of a time synchronization anomaly diagnosis method according to an embodiment of the disclosure;
FIG. 3 is a block diagram of a main structure of a driving device, with a local time domain using a crystal oscillator of a network port of a router, for implementing the method of the disclosure; and
FIG. 4 is a block diagram of a main structure of a driving device, with a local time domain using a crystal oscillator of one of a plurality of control units, for implementing the method of the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

In some embodiments, a time synchronization method is applied to an intelligent driving device. The driving device includes a plurality of control units, a plurality of sensors, a network unit, and a router connecting the network unit to the plurality of control units.

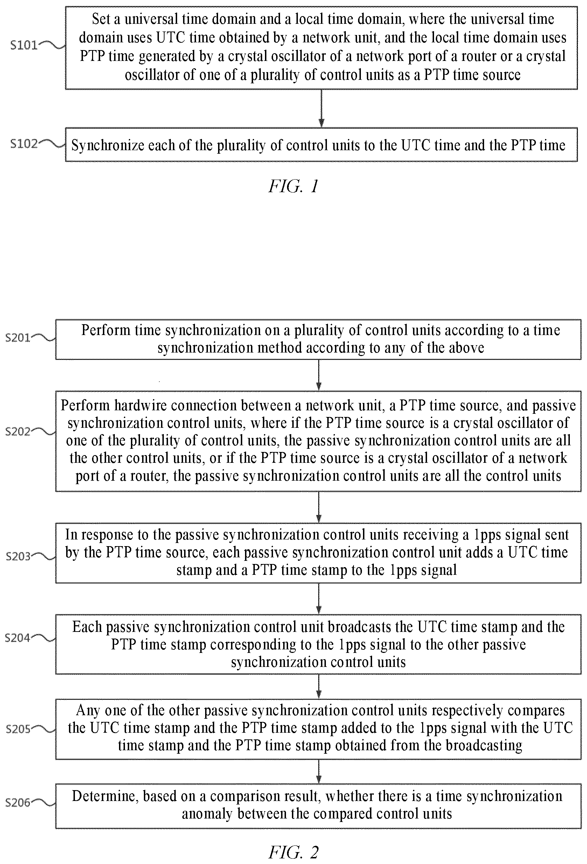

Referring to FIG. 1, FIG. 1 is a schematic flowchart of main steps of a time synchronization method according to an embodiment of the disclosure. As shown in FIG. 1, the time synchronization method in this embodiment of the disclosure mainly includes the following step S 101 and step S102.

Step S101: Set a universal time domain and a local time domain, where the universal time domain uses UTC time obtained by the network unit, and the local time domain uses PTP time generated by a crystal oscillator of a network port of the router or a crystal oscillator of one of the plurality of control units as a PTP time source.

Step S102: Synchronize each of the plurality of control units to the UTC time and the PTP time.

In the above embodiment, setting the UTC time and the PTP time and synchronizing the UTC time and the PTP time to each control unit achieve time synchronization of the double time domains for the control units, thereby avoiding the case in the prior art as follows: time stamps of different sensors in an intelligent driving system are inaccurate due to time jumps, resulting in a failure in multi-sensor data fusion, and affecting the functional operations of the intelligent driving system.

Specifically, in some embodiments, the synchronizing each of the plurality of control units to the UTC time and the PTP time includes: synchronizing the plurality of control units to the PTP time based on the generalized Precision Time Protocol (gPTP); and/or synchronizing the plurality of control units to the UTC time based on the Network Time Protocol (NTP).

Specifically, in some embodiments, the synchronizing the plurality of control units to the PTP time based on the gPTP protocol includes: if the local time domain uses the PTP time generated by the crystal oscillator of one of the plurality of control units, periodically synchronizing the other control units to the PTP time.

Specifically, in some embodiments, the synchronizing the plurality of control units to the PTP time based on the gPTP protocol includes: if the local time domain uses the PTP time generated by the crystal oscillator of the network port of the router, periodically synchronizing each of the plurality of control units to the PTP time.

In the above embodiment, the time generated by the crystal oscillator of one of the plurality of control units is used as the local time domain, or the time generated by the crystal oscillator of the network port of the router is used as the local time domain, and the other control units in the plurality of control units than this control unit, or the plurality of control units are all periodically synchronized to the PTP time in the local time domain, so as to achieve that the PTP time between the other control units in the plurality of control units than this control unit, or between the plurality of control units is not synchronized, and further achieve independent operation of the PTP time between the other control units in the plurality of control units than this control unit, or between the plurality of control units, thereby ensuring the stable operation of the control units, preventing the time of the control units from being affected by the time jumps, reducing an error rate of data fusion, and improving the data fusion efficiency.

Further, in some embodiments, the driving device further includes an electronic controller unit connected to a corresponding control unit through a CAN bus. The method further includes: synchronizing the electronic controller unit to the PTP time based on a CAN signal.

Further, in some embodiments, the method further includes: adding, by the control unit based on the PTP time, a PTP time stamp to data received from a corresponding sensor.

Specifically, in some embodiments, the sensor is an inertial sensor; and the adding, by the control unit based on the PTP time, a PTP time stamp to data received from a corresponding sensor includes: adding, based on the PTP time by a control unit corresponding to the inertial sensor, a PTP time stamp to six-axis data from the inertial sensor.

Specifically, in some embodiments, the sensor is an image sensor; the driving device further includes a frame synchronization hardwire, which connects a control unit in the plurality of control units that triggers a frame synchronization trigger signal, the image sensor, and a control unit corresponding to the image sensor; and the adding, by the control unit based on the PTP time, a PTP time stamp to data received from a corresponding sensor includes: in response to triggering of the frame synchronization trigger signal, recording, by the control unit corresponding to the image sensor, a triggering moment; and in response to receiving image frame data from the image sensor, adding the PTP time at the triggering moment to the image frame data as an image frame time stamp.

In the above embodiment, the control unit records the triggering moment by receiving the frame synchronization trigger signal, and in conjunction with the image frame data of the image sensor, the control unit adds the PTP time at the triggering moment to the image frame data as the image frame time stamp, so that a shooting moment of the image sensor is consistent with the time stamp of the image frame data in terms of time, thereby improving the accuracy of the image frame data.

Specifically, in some embodiments, the driving device further includes a radar; the electronic controller unit includes an electronic controller unit related to the radar; and the method further includes: adding, based on the PTP time by the electronic controller unit related to the radar, PTP time stamps to obtained point cloud data and/or perception target data after receiving reflected waves from the radar; and sending the point cloud data and/or the perception target data added with the PTP time stamps to the corresponding control unit through a controller area network (CAN) bus.

Further, in some embodiments, the driving device further includes a deserializer; and the method further includes: in response to triggering of the frame synchronization trigger signal, performing, by the image sensor, rising edge or falling edge triggering to generate image frame data; and performing, by the deserializer, a serial-to-parallel conversion on the image frame data, and sending the converted image frame data to the control unit corresponding to the image sensor.

Further, in some embodiments, the method further includes: during data exchange between the plurality of control units, adding, by a control unit that sends data, a PTP time stamp to the data as a data sending time stamp at a moment the data is sent; adding, by a control unit that receives the data, a PTP time stamp to the data as a data receiving time stamp at a moment the data is received; and obtaining, by the control unit that receives the data, a transmission delay of the data based on the data sending time stamp and the data receiving time stamp.

In the above embodiment, the control unit that sends the data adds the data sending time stamp to the sent data according to the moment the data is sent, and the control unit that receives the data adds the data receiving time stamp to the data according to the moment the data is received, so that transmission duration of sending and receiving the data is obtained, thereby detecting the transmission delay of the data of the two control units in data exchange.

Further, in some embodiments, the plurality of control units exchange data through the Ethernet, a universal asynchronous receiver-transmitter, or a serial peripheral interface.

Further, in some embodiments, the method further includes: adding, by each control unit based on the UTC time, a UTC time stamp to a log and/or a fault code generated by the control unit internally.

Further, in some embodiments, the plurality of control units belong to controllers within a same control domain of the driving device; or the plurality of control units belong to controllers within different control domains of the driving device, and there are a plurality of routers belonging to the controllers within the different control domains.

Referring to FIG. 2, FIG. 2 is a schematic flowchart of main steps of a time synchronization anomaly diagnosis method according to an embodiment of the disclosure. As shown in FIG. 1, the time synchronization anomaly diagnosis method in this embodiment of the disclosure is applied to an intelligent driving device. The method mainly includes the following step S201 to step S206.

Step S201: Perform time synchronization on the plurality of control units according to the time synchronization method according to any one of the above.

Step S202: Perform hardwire connection between the network unit, a PTP time source, and passive synchronization control units, where if the PTP time source is a crystal oscillator of one of the plurality of control units, the passive synchronization control units are all the other control units, or if the PTP time source is a crystal oscillator of a network port of the router, the passive synchronization control units are all the control units.

Step S203: In response to the passive synchronization control units receiving a IPulsePerSecond (1pps) signal sent by the PTP time source, each passive synchronization control unit adds a UTC time stamp and a PTP time stamp to the 1pps signal.

Step S204: Each passive synchronization control unit broadcasts the UTC time stamp and the PTP time stamp corresponding to the 1pps signal to the other passive synchronization control units.

Step S205: Any one of the other passive synchronization control units respectively compares the UTC time stamp and the PTP time stamp added to the 1pps signal with the UTC time stamp and the PTP time stamp obtained from the broadcasting.

Step S206: Determine, based on a comparison result, whether there is a time synchronization anomaly between the compared control units.

Specifically, in some embodiments, the determining, based on a comparison result, whether there is a time synchronization anomaly between the compared control units includes: if the comparison result is greater than a preset threshold, determining that there is a time synchronization anomaly between the compared control units.

Specifically, in some embodiments, the respectively comparing, by any one of the other passive synchronization control units, the UTC time stamp and the PTP time stamp added to the 1pps signal with the UTC time stamp and the PTP time stamp obtained from the broadcasting includes: if a difference between the two UTC time stamps is greater than a preset UTC threshold, determining that there is a UTC time synchronization anomaly between the compared control units; and/or if a difference between the two PTP time stamps is greater than a preset PTP time threshold, determining that there is a PTP time synchronization anomaly between the compared control units, so as to achieve respective comparison of the UTC time and the PTP time between the compared control units and respective anomaly determination.

Specifically, in some embodiments, the respectively comparing, by any one of the other passive synchronization control units, the UTC time stamp and the PTP time stamp added to the 1pps signal with the UTC time stamp and the PTP time stamp obtained from the broadcasting includes: if a difference between the two UTC time stamps is greater than a preset UTC time threshold, and/or if a difference between the two PTP time stamps is greater than a preset PTP time threshold, determining that there is a time synchronization anomaly between the compared control units, so as to achieve the unified comparison of the UTC time and the PTP time between the compared control units and the unified anomaly determination.

Specifically, in some embodiments, the UTC time threshold and the PTP time threshold are both 1 s. The UTC time threshold and the PTP time threshold herein are for exemplary illustration only. In actual testing, those skilled in the art may perform setting according to actual requirements, and details are not repeated herein.

Further, in some embodiments, the method further includes: recording the anomaly and giving a fault alarm.

Specifically, in the time synchronization anomaly diagnosis method, the time synchronization condition of the intelligent driving device subjected to the time synchronization is diagnosed, and when there is a time synchronization anomaly, the anomaly condition is recorded and the fault alarm is given, so that time synchronization detection and fault alarming of the intelligent driving device are achieved, thereby facilitating the maintenance and repair of the intelligent driving device.

In the above embodiment, each passive synchronization control unit adds the UTC time stamp and the PTP time stamp to the 1pps signal and broadcasts the UTC time stamp and the PTP time stamp to the other passive synchronization control units, and the passive synchronization control unit respectively compares the two received time stamps with the two time stamps of its own corresponding to the same 1pps signal, and determines, based on the comparison result, whether there is a time anomaly between the two compared control units, thereby detecting the time synchronization of the two control units.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

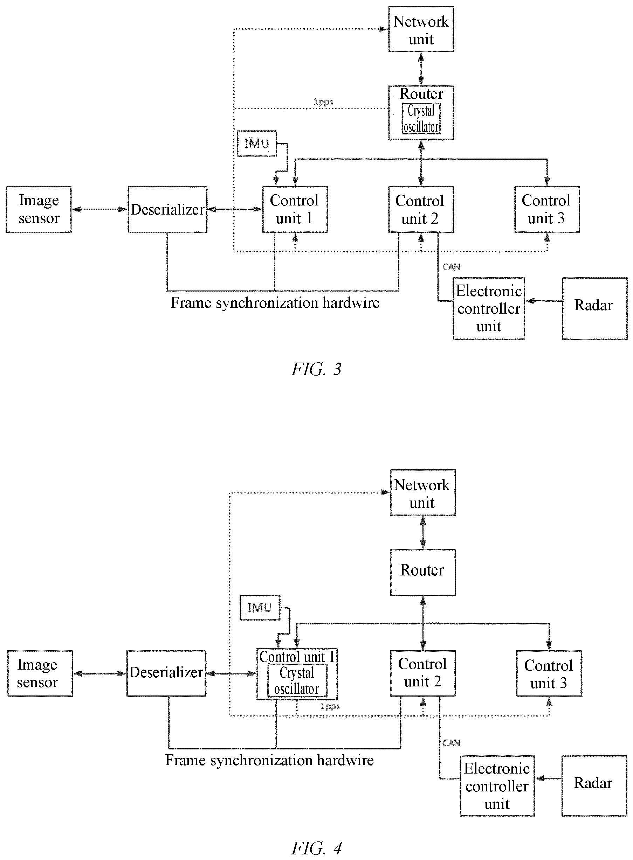

Further, the disclosure further provides a driving device. Referring to FIG. 3, FIG. 3 is a block diagram of a main structure of a driving device, with a local time domain using a crystal oscillator of a network port of a router, for implementing the method of the disclosure.

Referring to FIG. 4, FIG. 4 is a block diagram of a main structure of a driving device, with a local time domain using a crystal oscillator of one of a plurality of control units, for implementing the method of the disclosure.

As shown in FIG. 3 and FIG. 4, the driving device in this embodiment of the disclosure mainly includes a plurality of control units, a plurality of sensors, a network unit, and a router connecting the network unit to the plurality of control units.

As shown in FIG. 3, in some embodiments, the network unit is used as a UTC time source, and the crystal oscillator of the network port of the router is used as a PTP time source, so as to obtain UTC time and PTP time. The driving device is applicable to the time synchronization method and the time synchronization anomaly diagnosis method according to any one of the above.

As shown in FIG. 4, in some embodiments, the network unit is used as a UTC time source, and the crystal oscillator of one of the plurality of control units is used as a PTP time source, so as to obtain UTC time and PTP time. Specifically, in this embodiment, a crystal oscillator of a control unit 1 is used as the PTP time source, and the driving device is applicable to the time synchronization method and the above time synchronization anomaly diagnosis method according to any one of the above.

Further, in some embodiments, the driving device further includes a frame synchronization hardwire, and the frame synchronization hardwire is configured to connect a control unit in the plurality of control units that triggers a frame synchronization trigger signal, an image sensor from the plurality of sensors, and a control unit corresponding to the image sensor.

Further, in some embodiments, the driving device further includes a deserializer, the deserializer is connected to each of an image sensor from the plurality of sensors and a control unit corresponding to the image sensor, and the deserializer is configured to perform a serial-to-parallel conversion on image frame data of the image sensor, and send the converted image frame data to the control unit.

Further, in some embodiments, the network unit, the router or the control unit used as the PTP time source, and passive synchronization control units are in hardwire connection.

Specifically, in some embodiments, the driving device may be a vehicle. In other embodiments, the driving device may alternatively be a type of driving device in the prior art, as long as it can perform the time synchronization method and the time synchronization anomaly diagnosis method. Details are not provided herein.

The above driving device is configured to implement the embodiments of the time synchronization method and the time synchronization anomaly diagnosis method shown in FIG. 1 and FIG. 2. The technical principles of, technical problems solved by, and technical effects provided by the time synchronization method and the time synchronization anomaly diagnosis method are similar, and those skilled in the art can clearly understand that, for ease and simplicity of description, for a specific working process and a related description of the driving device, reference may be made to the content described in the embodiments of the time synchronization method and the time synchronization anomaly diagnosis method, which will not be repeated herein.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program code, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, etc. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A time synchronization method, wherein the method is applied to an intelligent driving device, and the driving device comprises a plurality of control units, a plurality of sensors, a network unit, and a router connecting the network unit to the plurality of control units; and
the method comprises the following steps:
setting a universal time domain and a local time domain, wherein the universal time domain uses UTC time obtained by the network unit, and the local time domain uses PTP time generated by a crystal oscillator of a network port of the router or a crystal oscillator of one of the plurality of control units as a PTP time source; and
synchronizing each of the plurality of control units to the UTC time and the PTP time.

2. The time synchronization method according to claim 1, wherein the synchronizing each of the plurality of control units to the UTC time and the PTP time comprises:
synchronizing the plurality of control units to the PTP time based on the gPTP protocol; and/or
synchronizing the plurality of control units to the UTC time based on the NTP protocol.

3. The time synchronization method according to claim 2, wherein the synchronizing the plurality of control units to the PTP time based on the gPTP protocol comprises:
if the local time domain uses the PTP time generated by the crystal oscillator of one of the plurality of control units, periodically synchronizing the other control units to the PTP time.

4. The time synchronization method according to claim 2, wherein the synchronizing the plurality of control units to the PTP time based on the gPTP protocol comprises:
if the local time domain uses the PTP time generated by the crystal oscillator of the network port of the router, periodically synchronizing each of the plurality of control units to the PTP time.

5. The time synchronization method according to any one of claims 1 to 4, further comprising:
adding, by the control unit based on the PTP time, a PTP time stamp to data received from a corresponding sensor.

6. The time synchronization method according to claim 5, wherein the sensor is an image sensor;
the driving device further comprises a frame synchronization hardwire, which connects a control unit in the plurality of control units that triggers a frame synchronization trigger signal, the image sensor, and a control unit corresponding to the image sensor; and
the adding, by the control unit based on the PTP time, a PTP time stamp to data received from a corresponding sensor comprises:
in response to triggering of the frame synchronization trigger signal, recording, by the control unit corresponding to the image sensor, a triggering moment; and
in response to receiving image frame data from the image sensor, adding the PTP time at the triggering moment to the image frame data as an image frame time stamp.

7. The time synchronization method according to claim 6, wherein the driving device further comprises a deserializer; and
the method further comprises: in response to triggering of the frame synchronization trigger signal, performing, by the image sensor, rising edge or falling edge triggering to generate image frame data; and
performing, by the deserializer, a serial-to-parallel conversion on the image frame data, and sending the converted image frame data to the control unit corresponding to the image sensor.

8. The time synchronization method according to any one of claims 1 to 7, further comprising:
during data exchange between the plurality of control units, adding, by a control unit that sends data, a PTP time stamp to the data as a data sending time stamp at a moment the data is sent;
adding, by a control unit that receives the data, a PTP time stamp to the data as a data receiving time stamp at a moment the data is received; and
obtaining, by the control unit that receives the data, a transmission delay of the data based on the data sending time stamp and the data receiving time stamp.

9. The time synchronization method according to any one of claims 1 to 8, further comprising:
adding, by each control unit based on the UTC time, a UTC time stamp to a log and/or a fault code generated by the control unit internally.

10. The time synchronization method according to any one of claims 1 to 9, wherein the plurality of control units belong to controllers within a same control domain of the driving device; or the plurality of control units belong to controllers within different control domains of the driving device, and there are a plurality of routers belonging to the controllers within the different control domains.
